# EUROPEAN PATENT SPECIFICATION

(11) **EP 3 028 757 B1**
(45) Date of publication and mention of the grant of the patent: **07.04.2021**
(21) Application number: 13890651.6
(22) Date of filing: 18.09.2013
(51) Int. Cl.: B01D 24/02, B01D 24/00, B01D 29/62, B01D 36/04, B03B 5/28

(54) **FILTERING DEVICE AND FLUID PURIFICATION SYSTEM**
FILTERUNGSVORRICHTUNG UND FLÜSSIGKEITSREINIGUNGSSYSTEM
DISPOSITIF DE FILTRAGE ET SYSTÈME DE PURIFICATION DE FLUIDE

(30) Priority: 02.08.2013 JP 2013161642
(43) Date of publication of application: 08.06.2016
(73) Proprietor: Industria Co., Ltd., Saitama 358-0014 (JP)
(72) Inventor: TAKAHASHI Kazuaki, Saitama 358-0014 (JP)
(74) Representative: Gill Jennings & Every LLP
(86) International application number: PCT/JP2013/075086
(87) International publication number: WO 2015/015658

(56) References cited:
- EP-A1- 0 250 639
- CN-U- 202 061 432
- FR-A1- 2 454 322
- JP-A- H0 679 107
- JP-A- H1 052 615
- JP-A- H1 094 706
- JP-A- 2000 511 823
- JP-A- 2004 188 364
- JP-A- 2012 196 592
- JP-U- S5 469 774

## Description

### Technical Field

The present invention relates to a filter device and a fluid purification system which remove minute matters such as fine powdery dust contained in a fluid, foreign matters and other matters mixed in a fluid, contaminants, and light waste such as threadlike waste and fibrous waste.

### Background Art

For example, in a machining apparatus, cutting work is performed while supplying a cutting fluid from a supply tank, and the cutting fluid contains minute matters such as fine powdery cutting waste, foreign matters, matters mixed therein, and contaminants.

When the cutting fluid containing the minute matters is supplied to a filter device, +the filter device removes the minute matters and then returns the cutting fluid into the supply tank (e.g., refer to Patent Literature 1).

### Citation List

### Patent Literature

Patent Literature 1: JP 2001-137743 A

### Summary of Invention

### Technical Problem

Examples of the above filter device include a filter device which catches minute matters on a filter membrane to remove the minute matters or removes the minute matters by precipitation. However, the filter membrane may be clogged, and if the filter membrane is clogged, the filter membrane should be cleaned by flowing a cleaning liquid in a direction opposite to the filtering direction, or the filter device should be disassembled to clean the filter membrane.

For example, in the filter device whose filter membrane is cleaned by flowing the cleaning liquid in the direction opposite to the filtering direction, it is difficult to clean the filter membrane sufficiently, and to make matters worse, cleaning operation which requires disassembling the filter device to clean the filter membrane is troublesome. If the filter membrane is used repeatedly, the filtering accuracy is mostly deteriorated, so that the filter membrane is likely to be clogged. Therefore, most filter membranes are disposable filter membranes, thus increasing in cost.

In a filter device which removes minute matters using a centrifugal separator or the like, light waste such as threadlike waste and fibrous waste often fails to be removed, and there is a problem that algae grow after cleaning.

In view of the above circumstances, an object of this invention is to provide a filter device and a fluid purification system which can reliably remove minute matters, can be cleaned in a simple manner instead of being replaced, and are low cost.

FR 2454322 discloses a filter device.

### Solution to Problem

In order to solve the above problem and achieve the object, the present invention provides a fluid purification system with features as set out in claim 1.

The invention further provides a device which includes stirring means which performs stirring when the plurality of filter pieces are dispersed to be cleaned.

### Advantageous Effects of Invention

According to the above constitutions, this invention has the following effects.

cylindrical, and wherein the filter device includes: a filtering chamber for filtering liquid, the filtering chamber having: a filtering portion (22) arranged inside of the cylindrical case body along a cylindrical axis direction for filtering the liquid by accumulating a plurality of filter pieces; a cleaning portion arranged outside the cylindrical case body and connected to a liquid outflow port for cleaning by dispersing the plurality of filter pieces in a volume larger than a volume of the filtering portion; and moving means for moving the plurality of filter pieces between the filtering portion and the cleaning portion, wherein in a fluid purification state the plurality of filter pieces are accumulated in the filtering portion to filter the supplied liquid and the filtered liquid is guided to the fluid outflow post via the cleaning portion for purifying the fluid, and in a cleaning state of the device the plurality of filter pieces are dispersed in the cleaning portion to be cleaned by the supplied liquid and the liquid is guided to the fluid outflow port for cleaning the device.

The invention further provides a device which includes stirring means which performs stirring when the plurality of filter pieces are dispersed to be cleaned.

### Advantageous Effects of Invention

According to the above constitutions, this invention has the following effects.

In the invention, the liquid flows into the filtering chamber to accumulate the filter pieces and, thus, to filter the liquid, and the liquid flows into the filtering chamber to disperse and clean the filter pieces. After the completion of the cleaning, the liquid flows into the filtering chamber to accumulate the filter pieces and, thus, to be allowed to be filtered. Consequently, the filter pieces can be easily reused without disassembly or replacement.

In the invention, the volume of the filtering portion is brought into the filtering state to accumulate the filter pieces and, thus, to filter the liquid, and the volume of the filtering portion is enlarged into the cleaning state to disperse the filter pieces and, thus, to allow cleaning of the filter pieces. Since the volume of the filtering portion is variable, the filtering of the liquid and the cleaning of the filter pieces can be achieved simultaneously, so that the filter pieces can be easily reused without disassembly or replacement.

In the invention, the filtering chamber has the filtering portion in which the filter pieces are accumulated to filter the liquid and the cleaning portion in which the filter pieces are dispersed to be cleaned, and the filter pieces are moved between the filtering portion and the cleaning portion to allow the filtering of the liquid and the cleaning of the filter pieces, so that the filter pieces can be easily reused without disassembly or replacement.

In the invention, stirring is performed when the filter pieces are dispersed to be cleaned, and the filter pieces can be effectively cleaned by this stirring.

In the invention, the minute matters contained in the fluid are separated by the centrifugal separator, and the remaining minute matters separated by the centrifugal separator are removed by the filter device which is arranged at the post stage of the centrifugal separator, whereby the minute matters can be reliably removed.

### Brief Description of Drawings

Fig. 1 is a view showing a filter device according to a first example of the present invention.
Fig. 2 is a view showing a filter device according to a second example of the present invention.
Fig. 3 is a view showing a filter device according to a third example of the present invention.
Fig. 4 is a view showing a filter device according to a fourth example of the present invention.
Fig. 5 is a view showing a filter device according to a fifth example of the present invention.
Fig. 6 is a view showing a filter device according to a sixth example of the present invention.
Fig. 7 is a view showing a fluid purification system of the first embodiment.
Fig. 8 is a view showing a fluid purification system of the second example.
Fig. 9 is a view showing a fluid purification system of the third example.

### Description of Embodiments

Hereinafter, examples of a filter device and fluid purification system of this invention will be described.

The filter device and the fluid purification system of this invention are used in removal of minute matters contained in raw materials and other fluids for medicines, chemicals, foods, beverages, in removal of minute matters such as cutting powders contained in cutting fluids for vehicles, precision equipment, machine tools, and processing industries, in removal of minute matters contained in circulating water and waste water in each factory, water treatment, or the like, in removal of minute matters such as impurities contained in a fluid used in a semiconductor and biotechnology, and in removal of minute matters as foreign matters contained in a fluid such as washing water and a solvent. Thus, the filter device and the fluid purification system are widely used when catching and removing minute matters contained in liquids and gas fluids.

### [Filter Device]

### (First Example)

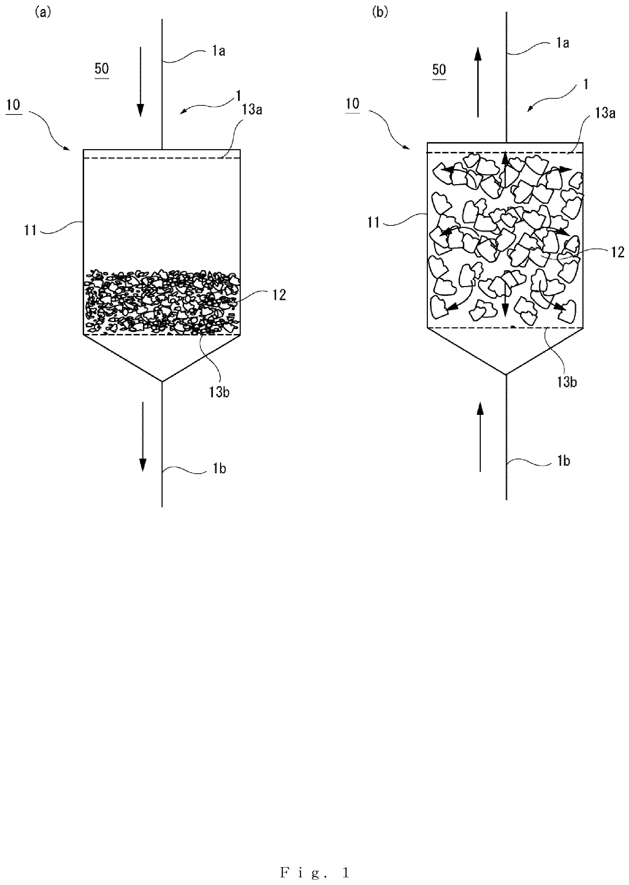

A filter device of this embodiment will be described based on Fig. 1. Fig. 1(a) shows a filtering state of the filter device, and Fig. 1(b) shows a cleaning state of the filter device.

A filter device 50 of this example filters a liquid to remove minute matters mixed in the liquid. In this filter device 50, a device body 10 includes a filtering chamber 11 for filtering a liquid. The filtering chamber 11 is provided with mesh plates 13a and 13b, and a plurality of filter pieces 12 are stored between the mesh plates 13a and 13b. The filtering chamber 11 is arranged in a flow passage 1 through which a liquid flows. Although the filtering chamber 11 filters a liquid flowing from one flow passage 1a to the other flow passage 1b, the filtering chamber 11 may filter the liquid flowing from the flow passage 1b to the flow passage 1a, and the liquid may flow from either of the flow passages 1a and 1b. The filter pieces 12 are accumulated into a mass by a pressure of the flowing liquid, and the liquid is filtered by the accumulated filter pieces 12 to capture and remove minute matters (Fig. 1(a)).

In the filter device 50, although a liquid is filtered through the filter pieces 12 to remove minute matters mixed in the liquid, clogging may occur because the minute matters are caught and removed by the filter pieces 12. Thus, for example, the liquid flows from the flow passages 1a to the flow passage 1b, or the liquid flows from the flow passages 1b to the flow passage 1a, and the liquid flows from any of the flow passages 1a and 1b under such a pressure that the accumulated filter pieces 12 are dispersed. This constitution allows the accumulated filter pieces 12 to be dispersed and cleaned in the filtering chamber 11 by the pressure of the flowing liquid (Fig. 1 (b) ) . The liquid for dispersing and cleaning the accumulated filter pieces 12 includes a cleaning liquid mixed with chemicals, tap water, filtrate, purified water, and steam. The accumulated filter pieces 12 may be not only cleaned but also sterilized or heat-treated with steam or the like.

As described above, although the liquid flows into the filtering chamber 11 at a predetermined pressure to accumulate the filter pieces 12 and, thus, to be filtered, during the cleaning of the filter pieces 12, the liquid flows into the filtering chamber 11 at a low pressure different from that during filtering to disperse and clean the filter pieces 12. After the completion of the cleaning, the liquid flows into the filtering chamber 11 at a predetermined chamber to accumulate the filter pieces 12 and, thus, to be allowed to be filtered, so that the filter pieces 12 can be easily reused without disassembly or replacement.

### <Filter Pieces>

Although the filter pieces have a granular shape, they may have any shape, such as a pebble shape, a small spherical shape, a cotton-like shape, or a plate-like shape, and although the size is preferably 0.1 cm² to 5 cm², no limitations in particular are imposed.

An average pore diameter of a microporous filtration membrane used for the filter pieces may be in a range of from 0.01 µm or more and 10 µm or less. Preferred is 0.45 µm or more and 3 µm or less, and more preferred is 0.45 µm or less. Alternatively, preferred is 0.02 µm or more and 0.2 µm or less, and most preferred is 0.02 µm or more and 0.1 µm or less.

A microporous filtration membrane having an average pore diameter of 0.45 µm or more and 3 µm or less is often used for applications of filtering raw materials and other fluids for medicines, chemicals, foods, beverages, and a microporous filtration membrane having an average pore diameter of 0.02 µm or more and 8.0 µm or less is particularly suitable for fluid filtering application for cutting fluids for vehicles, precision equipment, machine tools, and processing industries. Meanwhile, a microporous filtration membrane having an average pore diameter of 0.45 µm or more and 5 µm or less is often used for fluid filtering application for circulating water and waste water in each factory, water treatment, or the like, and a microporous filtration membrane having an average pore diameter of 0.02 µm or more and 0.2 µm or less is particularly suitable for fluid filtering application in a semiconductor and biotechnology. The higher the integration level of a semiconductor, the smaller the pore diameter of a membrane preferably used, and the pore diameter is most preferably 0.02 µm or more and 0.1 µm or less.

Examples of materials of the membrane include fluororesins such as polytetrafluoroethylene and polyvinylidene fluoride as membrane materials highly resistant to heat and chemicals and hardly eluted and polysulfone polymers such as polysulfone, polyethersulfone, and polyphenylenesulfone. Examples of a membrane material highly resistant to chemicals include a polyolefin membrane such as polyethylene and polypropylene.

### (Second Example)

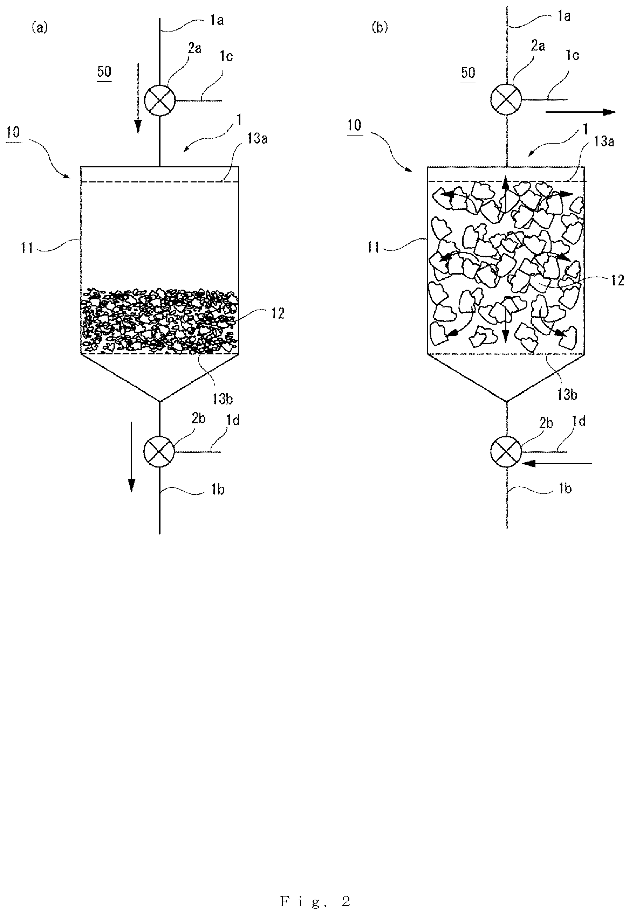

A filter device of this example will be described based on Fig. 2. Fig. 2(a) shows a filtering state of the filter device, and Fig. 2(b) shows a cleaning state of the filter device.

Although a filter device 50 of this example is constituted similarly to the first embodiment, switching valves 2a and 2b are arranged in flow passages 1a and 1b through which a liquid flows. The switching valves 2a and 2b switch the flow of a liquid between a filtering side and a cleaning side. If the switching valves 2a and 2b switches the flow of a liquid to the filtering side, the liquid is filtered by a plurality of filter pieces 12 accumulated by flowing the liquid from the flow passage 1a into a filtering chamber 11 (Fig. 2(a)). If the switching valves 2a and 2b switches the flow of the liquid to the cleaning side, the liquid flows from a passage 1d into the filtering chamber 11 in a direction opposite to a cleaning/filtering direction to disperse and clean the accumulated filter pieces 12 in the filtering chamber 11 by the pressure of the flowing liquid, and the liquid used for cleaning is discharged from a flow passage 1c (Fig. 2 (b) ) . The liquid flowing from the passage 1d into the filtering chamber 11 is a cleaning liquid mixed with chemicals, tap water, filtrate, purified water, steam, or the like. The accumulated filter pieces 12 may be not only cleaned but also sterilized or heat-treated with steam or the like.

### (Third Example)

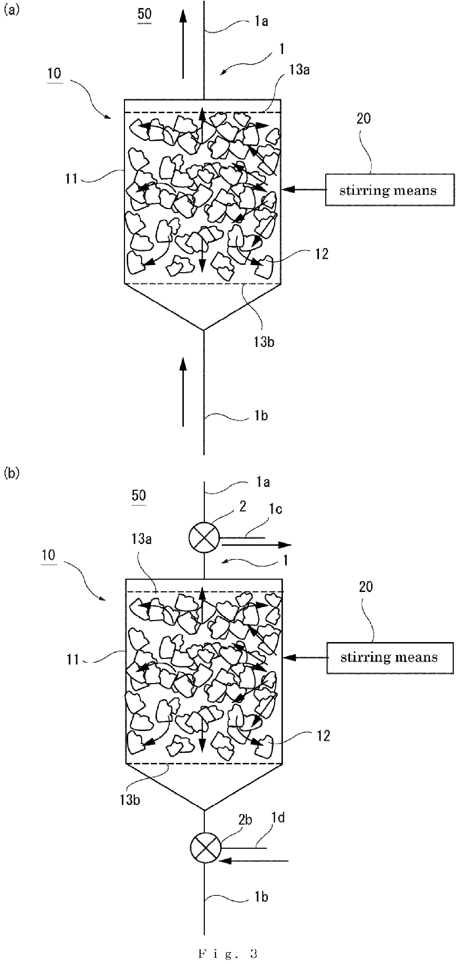

A filter device of this example will be described based on Fig. 3. Fig. 3(a) is a view in which the third example is applied to the filter device of the first example, and Fig. 3(b) is a view in which the third example is applied to the filter device of the second example.

In the example shown in Fig. 3(a), stirring means 20 which performs stirring when a plurality of filter pieces 12 are dispersed to be cleaned is provided. The stirring means 20 is mechanically configured by a stirrer and stirs a liquid in a filtering chamber 11 to disperse the filter pieces 12 and, thus, to allow effective cleaning of the filter pieces 12. The stirring means 20 is constituted of an injector injecting a liquid and may inject the liquid into the filtering chamber 11 to stir the liquid, or the stirring means 20 is constituted of an ultrasonic oscillator oscillating ultrasonic waves and may oscillate ultrasonic waves into the filtering chamber 11 to give oscillation and, thus, to stir the liquid. In the embodiment shown in Fig. 3(b), in addition to flowing the liquid into the filtering chamber 11, switching valves 2a and 2b are closed to store the liquid in the filtering chamber 11 and, thus, to stir the liquid and thereby clean the filter pieces 12, whereby a drainage may be discharged.

### (Fourth Example)

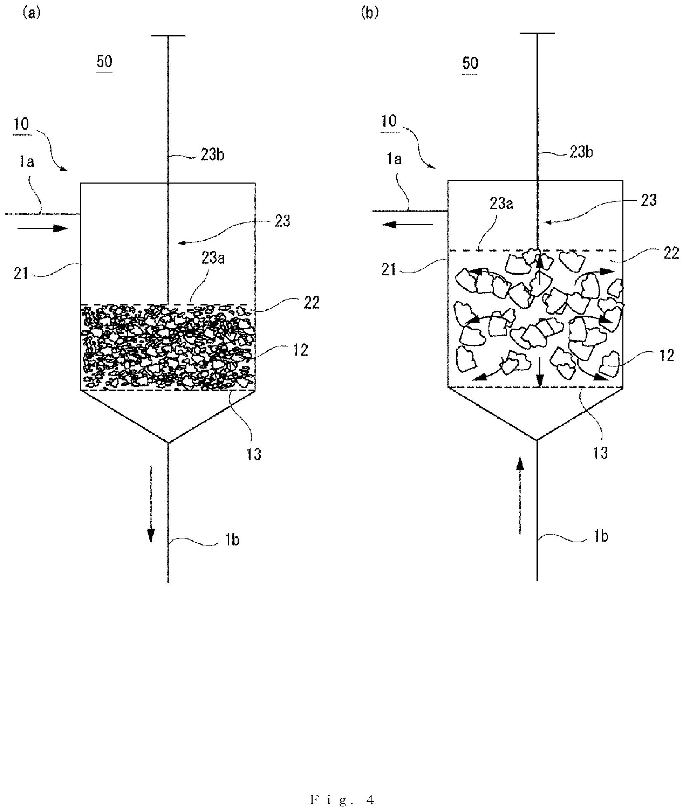

A filter device of this example will be described based on Fig. 4. Fig. 4(a) shows a filtering state of the filter device, and Fig. 4(b) shows a cleaning state of the filter device.

In a filter device 50 of this example, a device body 10 includes a filtering chamber 21 for filtering a liquid. In the filtering chamber 21, the volume of a filtering portion 22 in which a plurality of filter pieces 12 are stored is variable between the filtering state and the cleaning state by volume variable means 23.

The volume variable means 23 has a movable plate 23a and an operation shaft 23b moving the movable plate 23a. The movable plate 23a is a mesh plate having many small pores and is arranged movably in the filtering chamber 21. The operation shaft 23b is provided to be movable in an axial direction of the filtering chamber 21 by its rotation, and a front end of the operation shaft 23b is rotatably connected to the movable plate 23a. The operation shaft 23b is rotated manually or by drive means such as a motor.

When the operation shaft 23b is operated, the movable plate 23a brings the volume of the filtering portion 22 into the filtering state to accumulate the filter pieces 12 and, thus, to flow a liquid in the filtering direction from an upstream flow passage 1a. The liquid flows through the filtering portion 22 to be filtered by the accumulated filter pieces 12, and minute matters are caught and removed by the filter pieces 12 and then delivered through a downstream flow passage 1b (Fig. 4 (a) ) . In this embodiment, when the operation shaft 23b is operated, the movable plate 23a changes the volume of the filtering portion 22, and this volume change changes the filter density of the filter pieces 12. The filter density of the filter pieces 12 can be thus controlled.

When the operation shaft 23b is operated, the movable plate 23a enlarges the volume of the filtering portion 22 into the cleaning state to disperse the filter pieces 12 and, thus, to flow the liquid from the downstream flow passage 1b in a direction opposite to the cleaning/filtering direction. According to this constitutions, the dispersed filter pieces 12 are cleaned (Fig. 4(b)).

As described above, the volume of the filtering portion 22 is brought into the filtering state to accumulate the filter pieces 12 and, thus, to allow filtering of a liquid, or the volume of the filtering portion 22 is enlarged into the cleaning state to disperse the filter pieces 12 and, thus, to allow cleaning of the filter pieces. Namely, since the volume of the filtering portion 22 is variable, the filtering of the liquid and the cleaning of the filter pieces 12 can be achieved simultaneously, and the filter pieces 12 can be easily reused without disassembly or replacement.

### (Fifth Example)

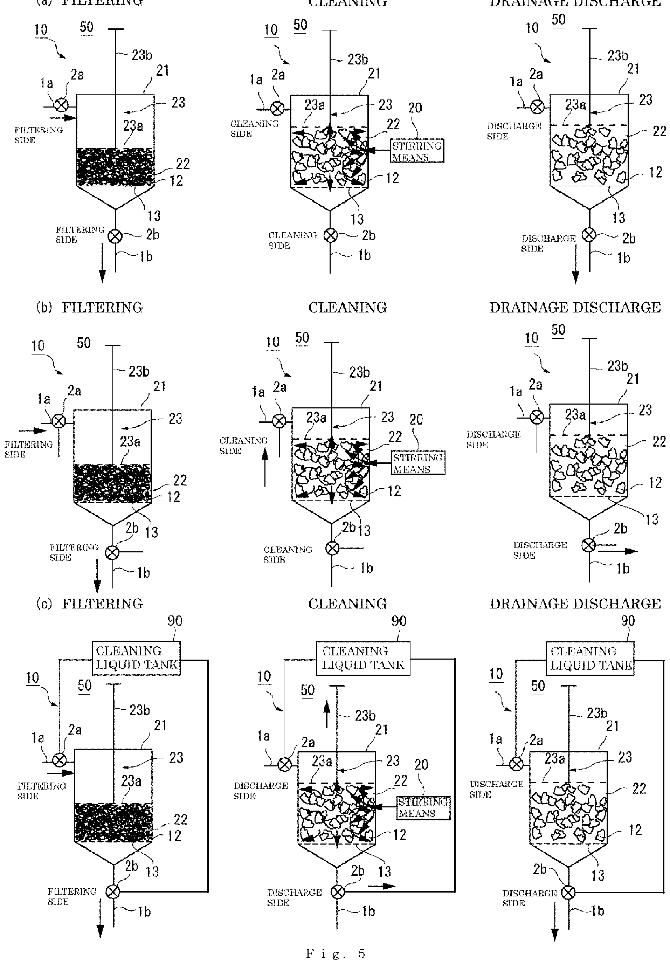

A filter device of this example will be described based on Fig. 5. Figs. 5(a) to 5(c) are views in which the fifth example is applied to the filter device of the fourth example.

This example is applied to the filter device of the fourth embodiment, and stirring means 20 which performs stirring when a plurality of filter pieces 12 are dispersed to be cleaned is provided. The stirring means 20 is constituted of an injector injecting a liquid and injects the liquid into a filtering portion 22 to stir the liquid. Alternatively, the stirring means 20 is constituted of an ultrasonic oscillator oscillating ultrasonic waves and may oscillate ultrasonic waves into the filtering portion 22 to give oscillation and, thus, to stir the liquid.

In the example shown in Fig. 5(a), when the liquid is filtered, switching valves 2a and 2b are opened to switch the flow of a liquid to a filtering side, and the liquid flows into a filtering chamber 11 to be filtered by a plurality of accumulated filter pieces 12. Meanwhile, when the filter pieces 12 are cleaned, the liquid is stored in the filtering chamber 11, and the switching valves 2a and 2b are closed to switch the flow of the liquid to a cleaning side. Then, the liquid is stirred while remaining stored in the filtering chamber 11, whereby the filter pieces 12 are cleaned. When a drainage is discharged, the switching valve 2a is closed to switch the flow of the liquid to a discharge side, and the switching valve 2b is then opened to discharge the drainage to the discharge side.

Although the example shown in Fig. 5(b) is constituted similarly to the example shown in Fig. 5 (a), when the filter pieces 12 are cleaned, while the switching valve 2b is closed to switch the flow of a liquid to the cleaning side, the switching valve 2a is opened to switch the flow of the liquid to the cleaning side, and a cleaning liquid mixed with chemicals, tap water, filtrate, purified water, or steam is supplied into the filtering chamber 11 to be stirred and, thus, to clean the filter pieces 12. The filter pieces 12 may be not only cleaned but also sterilized or heat-treated with steam or the like. When a drainage is discharged, while the switching valve 2a is closed to switch the flow of the liquid to the discharge side, the switching valve 2b is opened to switch the flow of the liquid to the discharge side, whereby the drainage is discharged.

The example shown in Fig. 5 (c) is constituted similarly to the example shown in Fig. 5(a), and when a liquid is filtered, the switching valves 2a and 2b are opened to switch the flow of the liquid to the filtering side and, thus, to flow the liquid into the filtering chamber 11, whereby the liquid is filtered by the accumulated filter pieces 12. At this time, a resultant filtrate is stored in a cleaning liquid tank 90. When the filter pieces 12 are cleaned, while the switching valve 2b is closed to switch the flow the liquid to the cleaning side, the switching valve 2a is opened to flow the liquid to the cleaning side, and the liquid is supplied into the filtering chamber 11 to be stirred and, thus, to clean the filter pieces 12. At the end of the cleaning, the filtrate stored in the cleaning liquid tank 90 is stirred while flowing. When a drainage is discharged, the switching valve 2b is opened to switch the flow to the discharge side and, thus, to discharge the drainage.

### (Sixth Example)

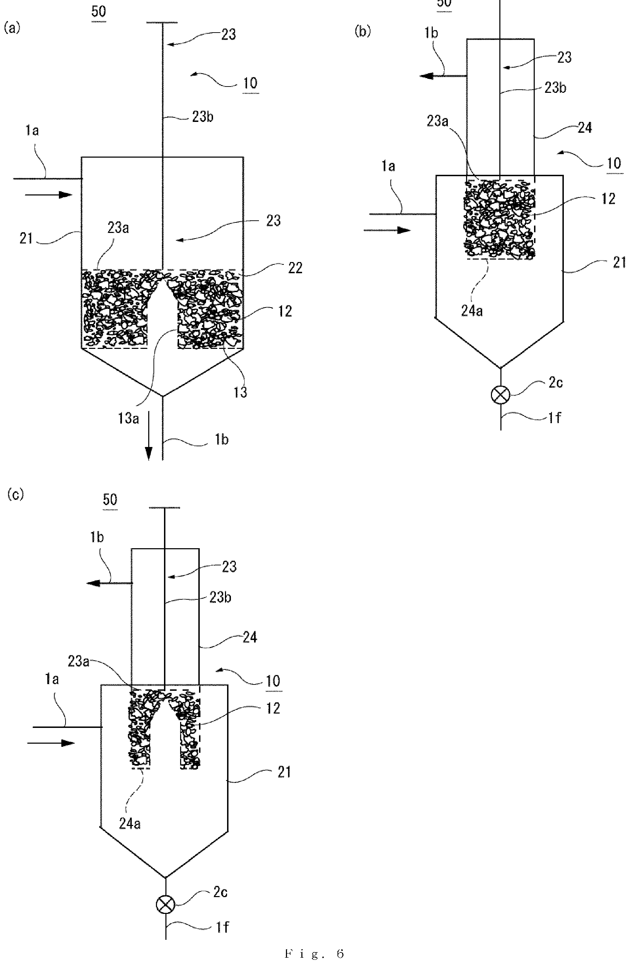

A filter device of this example will be described based on Figs. 6(a) to 6(c) . Although the example shown in Fig. 6(a) is constituted similarly to the fourth embodiment, a central portion 13a of a mesh plate 13 is formed into a columnar shape to increase a surface area of the mesh plate 13. A filtration area of a plurality of filter pieces 12 is enlarged by increasing the surface area of the mesh plate 13.

In Fig. 6(b), a device body 10 is configured so that a cylindrical case 24 is provided in a filtering chamber 21, and a portion 24a of the cylindrical case 24, which is located in the filtering chamber 21, is mesh. A movable plate 23a is provided movably in the cylindrical case 24, and the portion 24a of the cylindrical case 24, which is located in the filtering chamber 21, is mesh, whereby the filtration area of the filter pieces 12 is enlarged. When a drainage is discharged, the drainage after cleaning is discharged through a discharge passage 1f by opening a switching valve 2c.

Although the example shown in Fig. 6 (c) is constituted similarly to the example shown in Fig. 6 (b) , a bottom portion of the portion 24a of the cylindrical case 24, which is located in the filtering chamber 21, is recessed inward in a columnar shape, and the portion 24a of the cylindrical case 24, which is located in the filtering chamber 21, is mesh, whereby the filtration area of the filter pieces 12 is enlarged.

### [Fluid Purification System]

### (First Embodiment)

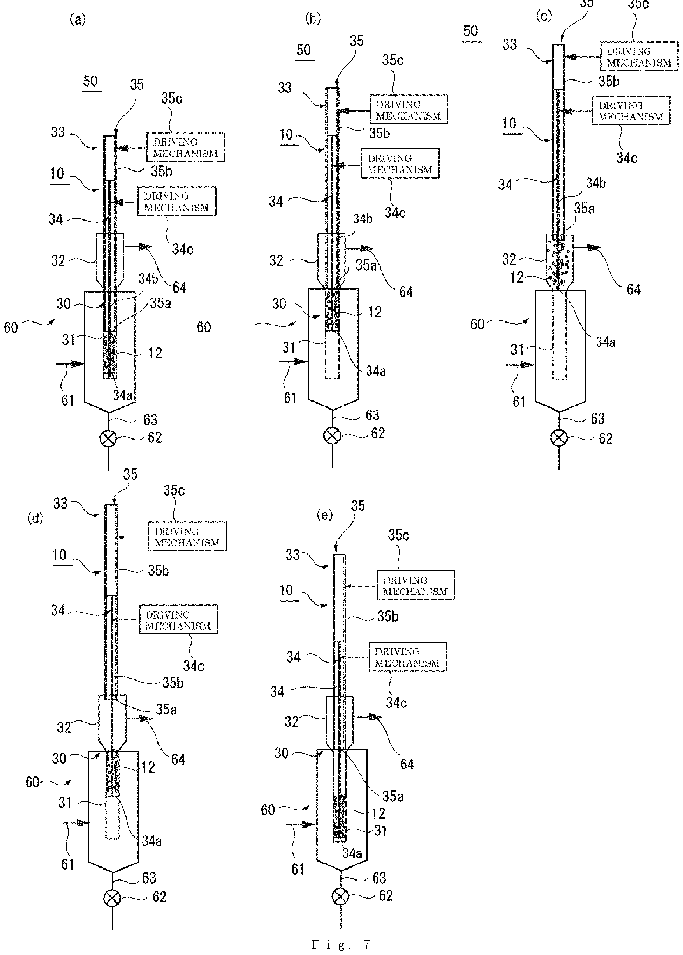

A fluid purification system of this embodiment will be described based on Fig. 7. In this embodiment, a centrifugal separator 60 which separates minute matters, contained in a fluid, by centrifugal force and a filter device 50 arranged at the post stage of the centrifugal separator 60 are provided.

In the centrifugal separator 60, a liquid flows from an inflow port 61, and the liquid contains minute matters. When the liquid flows into the centrifugal separator 60 at a predetermined flow rate, a vortex is thereby formed to move the minute matters outward in a centrifugal state. The speed of the vortex is reduced outside to settle the separated minute matters, and the settled minute matters are taken from a discharge pipe 63 by opening a discharge valve 62.

The liquid in the centrifugal separator 60 is sent to the filter device 50 to be filtered by the filter device 50 and, thus, to remove remaining minute matters separated by the centrifugal separator 60, whereby the liquid flows through an outflow port 64. The remaining minute matters separated by the centrifugal separator 60 are removed, whereby the minute matters can be more reliably removed.

In the filter device 50 of this embodiment, a device body 10 includes a filtering chamber 30 for filtering a liquid, and the filtering chamber 30 has a portion 31 in which a plurality of filter pieces 12 are accumulated to filter a liquid and a portion 32 in which the filter pieces 12 are dispersed to be cleaned. While the filtering portion 31 has a small-diameter cylindrical shape, the cleaning portion 32 has a larger diameter cylindrical shape than the filtering portion 31, and a bottom portion of the cleaning portion 32 is continuous with the filtering portion 31 through a taper. The filtering portion 31 is formed into a mesh tubular shape.

Between the filtering portion 31 and the cleaning portion 32, moving means 33 moving the filter pieces 12 is provided, and the moving means 33 has a first moving mechanism 34 and a second moving mechanism 35. The first moving mechanism 34 is constituted of a mesh plate 34a, a holding shaft 34b, and a driving mechanism 34c, and a front end of the holding shaft 34b is connected to a central portion of the mesh plate 34a. The holding shaft 34b is driven by the driving mechanism 34c, and the mesh plate 34a is moved along the filtering portion 31 (Fig. 7(b)) .

The second moving mechanism 35 is constituted of a mesh plate 35a, a holding shaft 35b, and a driving mechanism 35c, and a front end of the holding shaft 35b is connected to an outer circumferential portion of the mesh plate 35a. The holding shaft 35b is driven by the driving mechanism 35c, and the mesh plate 35a is moved between the filtering portion 31 and the cleaning portion 32.

In the filter device 50 of this embodiment, the filter pieces 12 are accumulated in the filtering portion 31 of the filtering chamber 30 by the mesh plates 34a and 35a, and a liquid flows in a filtering direction through an upstream flow passage 1a. The liquid is filtered by the accumulated filter pieces 12 to catch and remove minute matters and, thus, to deliver the minute matters through a downstream flow passage 1b (Fig. 7 (a) ) .

In the filter device 50, although a liquid is filtered by the filter pieces 12 to remove minute matters mixed in the liquid, clogging may occur because the minute matters are caught and removed by the filter pieces 12. Thus, the first moving mechanism 34 and the second moving mechanism 35 are driven, and the filter pieces 12 accumulated by the mesh plates 34a and 35a move from the filtering portion 31 toward the cleaning portion 32 (Fig. 7(b)).

If the filter pieces 12 accumulated by the mesh plates 34a and 35a move from the filtering portion 31 to the cleaning portion 32, the filter pieces 12 are dispersed in the cleaning portion 32. If a liquid flows into the filtering chamber 30 through the downstream flow passage 1b in this state, the filter pieces 12 are cleaned to discharge the liquid used in the cleaning through the downstream flow passage 1b (Fig. 7(c)). When the filter pieces 12 are cleaned, a liquid may be stirred by stirring means. As the stirring means, a stirrer, an injector injecting a liquid, or an ultrasonic oscillator oscillating ultrasonic waves is used, for example.

After the completion of the cleaning of the filter pieces 12, the first moving mechanism 34 is first driven to move the mesh plate 34a from the cleaning portion 32 toward the filtering portion 31. The movement of the mesh plate 34a allows the dispersed filter pieces 12 to move to the filtering portion 31 (Fig. 7(d)).

When the filter pieces 12 move from the cleaning portion 32 toward the filtering portion 31 to disappear from the cleaning portion 32, the second moving mechanism 35 is driven to move the mesh plate 35a from the cleaning portion 32 toward the filtering portion 31. The movement of the mesh plate 35a allows the dispersed filter pieces 12 to move to the filtering portion 31, and the filter pieces 12 are accumulated by the mesh plates 34a and 35a (Fig. 7(e)). Then, a liquid flows in the filtering direction through the upstream flow passage 1a, whereby the liquid can be filtered by the accumulated filter pieces 12 (Fig. 7(a)).

As described above, the filtering chamber 30 has the portion 31 in which the filter pieces 12 are accumulated to filter a liquid and the portion 32 in which the filter pieces 12 are dispersed to be cleaned, and the filter pieces 12 are moved between the filtering portion 31 and the cleaning portion 32 to allow the filtering of the liquid and the cleaning of the filter pieces, so that the filter pieces 12 can be easily reused without disassembly or replacement.

### (Second Example)

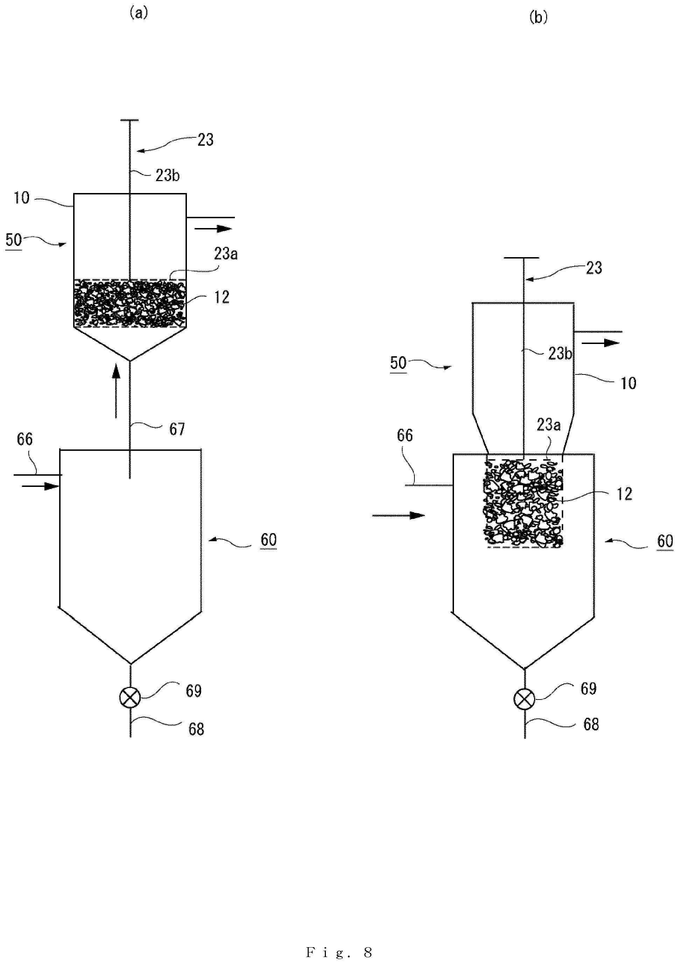

A fluid purification system of this example will be described based on Fig. 8. In this example, a centrifugal separator 60 which separates minute matters, contained in a fluid, by centrifugal force and a filter device 50 arranged at the post stage of the centrifugal separator 60 are provided. As this filter device 50, any of the filter devices of the first to sixth embodiments is used. The filter device 50 removes remaining minute matters separated by the centrifugal separator 60. In the embodiment shown in Fig. 8(a), the centrifugal separator 60 and the filter device 50 are connected through a pipe, and in the embodiment shown in Fig. 8(b), a filtering portion of the filter device 50 is arranged in the centrifugal separator 60.

In the centrifugal separator 60, a liquid flows from an inflow port 66, and the liquid contains minute matters. When the liquid flows into the centrifugal separator 60 at a predetermined flow rate, a vortex is thereby formed to move the minute matters outward in a centrifugal state. The speed of the vortex is reduced outside to settle the separated minute matters. The liquid used for separating the minute matters is sent into a filtering chamber of the filter device 50. The remaining minute matters separated by the centrifugal separator 60 are removed by the filter device 50, whereby the minute matters can be more reliably removed. The centrifugal separator 60 has in its lower portion a discharge pipe 68. The discharge pipe 68 is provided with a discharge valve 69, and the discharge valve 69 is opened to discharge the settled minute matters. The structure of the centrifugal separator 60 is not limited to this embodiment and may have a structure of a common centrifugal separator.

### (Third Example)

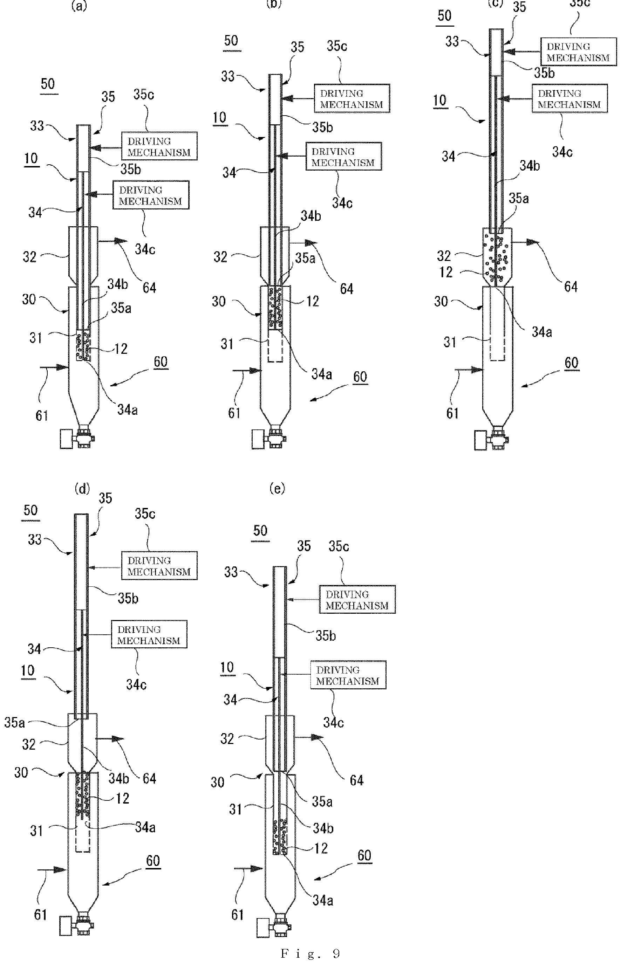

A fluid purification system of this embodiment will be described based on Fig. 9. Although this example is constituted similarly to the first embodiment, a centrifugal separator 60 and a filter device 50 are formed integrally, and a filtering portion on a liquid inflow side of the filter device 50 is arranged in the centrifugal separator 60. This embodiment has such a simple structure that a liquid used for separating minute matters directly flows inside from the liquid inflow side of the filter device 50 with no pipe, and remaining minute matters separated by the centrifugal separator 60 are removed by the filter device 50. In this embodiment, although the filtering portion on the liquid inflow side of the filter device 50 is shortened so as not to be located facing an inflow port 61, this constitution is not limited thereto.

### Industrial Applicability

This invention can be applied to a filter device and a fluid purification system which remove minute matters such as fine powdery dust contained in a fluid, foreign matters and other matters mixed in a fluid, contaminants, and light waste such as threadlike waste and fibrous waste. The filter device and the fluid purification system can reliably remove minute matters, can be cleaned in a simple manner instead of being replaced, and are low cost.

### Reference Signs List

- 1: flow passage through which a liquid flows
- 1a: upstream flow passage
- 1b: downstream flow passage
- 1c: discharge flow passage
- 2: switching valve
- 10: device body
- 11: filtering chamber
- 12: filter piece
- 13: mesh plate
- 20: stirring means
- 21: filtering chamber
- 22: filtering portion
- 23: volume variable means
- 23a: movable plate
- 23b: operation shaft
- 30: filtering chamber
- 31: filtering portion
- 32: cleaning portion
- 33: moving means
- 34: first moving mechanism
- 35: second moving mechanism
- 50: filter device
- 60: centrifugal separator

## Claims

1. A fluid purification system comprising:
a centrifugal separator (60) for separating minute matter contained in a fluid by centrifugal force; and
a filter device (50) for removing remaining minute matter from the centrifugal separator,
wherein the centrifugal separator (60) includes:
a cylindrical case body in which a vortex is formed by supplying the fluid containing the minute matter from a fluid inflow port (61) so that the centrifugal force moves the minute matter outward to separate the minute matter and such that the separated minute matter settles; and
a minute matter discharge portion (63) for discharging the minute matter settling in the cylindrical case body,
and wherein the filter device (50) includes:
a filtering chamber (30) for filtering liquid,
the filtering chamber having:
a filtering portion (31) arranged inside of the cylindrical case body along a cylindrical axis direction for filtering the liquid by accumulating a plurality of filter pieces (12);
a cleaning portion (32) for cleaning by dispersing the plurality of filter pieces, wherein the cleaning portion (32) is connected to a liquid outflow port (64), the cleaning portion (32) has a diameter larger than a diameter of the filtering portion (31), and a bottom portion of the cleaning portion (32) is continuous with the filtering portion (31) through a taper; and
moving means (33) for moving the plurality of filter pieces between the filtering portion (31) and the cleaning portion (32),
wherein the moving means (33) has a first moving mechanism (34) and a second moving mechanism (35),
the first moving mechanism (34) comprising a mesh plate (34a), a holding shaft (34b), and a driving mechanism (34c), and being configured such that a front end of the holding shaft (34b) is connected to a central portion of the mesh plate (34a), the holding shaft (34b) is driven by the driving mechanism (34c), and the mesh plate (34a) is moved along the filtering portion (31),
the second moving mechanism (35) comprising a mesh plate (35a), a holding shaft (35b) and a driving mechanism (35c), and being configured such that a front end of the holding shaft (35b) is connected to an outer circumferential portion of the mesh plate (35a), the holding shaft (35b) is driven by the driving mechanism (35c), and the mesh plate (35a) is moved between the filtering portion (31) and the cleaning portion (32),
wherein in a fluid purification state the plurality of filter pieces (12) are accumulated in the filtering portion (31) to filter the supplied liquid and the filtered liquid is guided to the fluid outflow port (64) via the cleaning portion (32), and
in a cleaning state of the device the plurality of filter pieces (12) are dispersed in the cleaning portion (32) to be cleaned by the supplied liquid and the liquid is guided to the fluid outflow port (64).

2. The fluid purification system according to claim 1, wherein the fluid inflow port (61) is arranged in a position opposed to the filtering portion (31).

3. The fluid purification system according to claim 1, comprising stirring means which performs stirring when the plurality of filter pieces are dispersed to be cleaned.

## Patentansprüche

1. Fluidreinigungssystem, umfassend:
einen Zentrifugalseparator (60) zum Trennen von sehr kleiner Materie, die in einem Fluid enthalten ist, durch Zentrifugalkraft; und
eine Filtervorrichtung (50) zum Entfernen von verbleibender sehr kleiner Materie aus dem Zentrifugalseparator,
wobei der Zentrifugalseparator (60) enthält:
einen zylindrischen Gehäusekörper, in dem ein Wirbel ausgebildet wird, indem das Fluid, das die sehr kleine Materie enthält, von einem Fluidzuflusskanal (61) derart zugeführt wird, dass die Zentrifugalkraft die sehr kleine Materie nach außen bewegt, um die sehr kleine Materie zu trennen, und derart, dass sich die getrennte sehr kleine Materie absetzt; und
einen Ausstoßabschnitt (63) für sehr kleine Materie zum Ausstoßen der sehr kleinen Materie, die sich in dem zylindrischen Gehäusekörper absetzt,
und wobei die Filtervorrichtung (50) enthält:
eine Filterkammer (30) zum Filtern von Flüssigkeit,
wobei die Filterkammer aufweist:
einen Filterabschnitt (31), der in dem Inneren des zylindrischen Gehäusekörpers entlang einer zylindrischen Achsenrichtung zum Filtern der Flüssigkeit durch ein Ansammeln von mehreren Filterstücken (12) angeordnet ist;
einen Reinigungsabschnitt (32) zum Reinigen durch ein Dispergieren der mehreren Filterstücke, wobei der Reinigungsabschnitt (32) mit einem Flüssigkeitsauslasskanal (64) verbunden ist, der Reinigungsabschnitt (32) einen Durchmesser aufweist, der größer als der Durchmesser des Filterabschnitts (31) ist, und ein Bodenabschnitt des Reinigungsabschnitts (32) mit dem Filterabschnitt (31) durch eine Verjüngung durchgehend ist; und
ein Bewegungsmittel (33) zum Bewegen der mehreren Filterstücke zwischen dem Filterabschnitt (31) und dem Reinigungsabschnitt (32),
wobei das Bewegungsmittel (33) einen ersten Bewegungsmechanismus (34) und einen zweiten Bewegungsmechanismus (35) aufweist,
wobei der erste Bewegungsmechanismus (34) eine Gitterplatte (34a), eine Haltewelle (34b) und einen Antriebsmechanismus (34c) umfasst und derart konfiguriert ist, dass ein vorderes Ende der Haltewelle (34b) mit einem mittleren Abschnitt der Gitterplatte (34a) verbunden ist, wobei die Haltewelle (34b) durch den Antriebsmechanismus (34c) angetrieben wird und die Gitterplatte (34a) entlang des Filterabschnitts (31) bewegt wird,
wobei der zweite Bewegungsmechanismus (35) eine Gitterplatte (35a), eine Haltewelle (35b) und einen Antriebsmechanismus (35c) umfasst und derart konfiguriert ist, dass ein vorderes Ende der Haltewelle (35b) mit einem äußeren Umfangsabschnitt der Gitterplatte (35a) verbunden ist, wobei die Haltewelle (35b) durch den Antriebsmechanismus (35c) angetrieben wird und die Gitterplatte (35a) zwischen dem Filterabschnitt (31) und dem Reinigungsabschnitt (32) bewegt wird,
wobei die mehreren Filterstücke (12) in einem Fluidreinigungszustand in dem Filterabschnitt (31) angesammelt werden, um die zugeführte Flüssigkeit zu filtern, und die gefilterte Flüssigkeit zu dem Fluidauslasskanal (64) über den Reinigungsabschnitt (32) geführt wird, und
wobei die mehreren Filterstücke (12) in einem Reinigungszustand der Vorrichtung in dem Reinigungsabschnitt (32) dispergiert werden, um durch die zugeführte Flüssigkeit gereinigt zu werden, und die Flüssigkeit zu dem Fluidauslasskanal (64) geführt wird.

2. Fluidreinigungssystem nach Anspruch 1, wobei der Fluideinlasskanal (61) in einer Position angeordnet ist, die dem Filterabschnitt (31) gegenüberliegt.

3. Fluidreinigungssystem nach Anspruch 1, umfassend ein Rührmittel, das ein Rühren durchführt, wenn die mehreren Filterstücke dispergiert werden, um gereinigt zu werden.

## Revendications

1. Système d'épuration de fluide comprenant :
un séparateur centrifuge (60) pour la séparation de matières minuscules contenues dans un fluide par une force centrifuge ; et
un dispositif de filtrage (50) pour l'élimination, du séparateur centrifuge, des matières minuscules restantes,
le séparateur centrifuge (60) comprenant :
un corps à boîtier cylindrique dans lequel se forme un tourbillon par la fourniture, de l'orifice d'entrée de fluide (61), du fluide contenant les matières minuscules de sorte que la force centrifuge déplace les matières minuscules vers l'extérieur afin de séparer les matières minuscules, et afin que les matières minuscules se déposent ;
et
une partie de décharge des matières minuscules (63) pour décharger les matières minuscules se déposant dans le corps à boîtier cylindrique, et
le dispositif de filtrage (50) comprenant :
une chambre de filtrage (30) pour le filtrage d'un liquide,
la chambre de filtrage comprenant :
une partie de filtrage (31) agencée à l'intérieur du corps à boîtier cylindrique le long de la direction d'un axe cylindrique pour le filtrage du liquide par l'accumulation d'une pluralité d'éléments de filtre (12) ;
une partie de nettoyage (32) pour nettoyer par la dispersion de la pluralité d'éléments de filtre, la partie de nettoyage (32) étant connectée à un orifice de sortie de liquide (64), le diamètre de la partie de nettoyage (32) étant supérieur à celui de la partie de filtrage (31), et une partie inférieure de la partie de nettoyage (32) étant continue avec la partie de filtrage (31) à travers un évasement ; et
un dispositif de déplacement (33) pour déplacer la pluralité d'éléments de filtre entre la partie de filtrage (31) et la partie de nettoyage (32) ;
le dispositif de déplacement (33) possédant un premier mécanisme de déplacement (34) et un deuxième mécanisme de déplacement (35),
le premier mécanisme de déplacement (34) comprenant une plaque de treillis (34a), un arbre de maintien (34b), et un mécanisme d'entraînement (34c), et étant configuré de sorte qu'une extrémité antérieure de l'arbre de maintien (34b) est connectée à une partie centrale de la plaque de treillis (34a), l'arbre de maintien (34b) étant entraîné par le mécanisme d'entraînement (34c), et la plaque de treillis (34a) étant déplacée le long de la partie de filtrage (31),
le deuxième mécanisme de déplacement (35) comprenant une plaque de treillis (35a), un arbre de maintien (35b), et un mécanisme d'entraînement (35c), et étant configuré de sorte qu'une extrémité antérieure de l'arbre de maintien (35b) est connectée à une partie circonférentielle extérieure de la plaque de treillis (35a), l'arbre de maintien (35b) étant entraîné par le mécanisme d'entraînement (35c), et la plaque de treillis (35a) étant déplacée entre la partie de filtrage (31) et la partie de nettoyage (32),
dans lequel, dans un état d'épuration de fluide, la pluralité d'éléments de filtre (12) est accumulée dans la partie de filtrage (31) pour filtrer le liquide fourni, et le liquide filtré est guidé vers l'orifice de sortie de liquide (64) à travers la partie de nettoyage (32), et
dans un état de nettoyage du dispositif, la pluralité d'éléments de filtre (12) est dispersée dans la partie de nettoyage (32) pour être nettoyée par le liquide fourni, et le liquide est guidé vers l'orifice de sortie de liquide (64).

2. Système d'épuration de fluide selon la revendication 1, l'orifice d'entrée de fluide (61) étant agencé dans une position opposée à la partie de filtrage (31).

3. Système d'épuration de fluide selon la revendication 1, comprenant un dispositif d'agitation effectuant une agitation lorsque la pluralité d'éléments de filtre est dispersée pour être nettoyée.
